# EUROPEAN PATENT SPECIFICATION

(11) **EP 3 200 527 B1**
(45) Date of publication and mention of the grant of the patent: **28.08.2019**
(21) Application number: 15758438.4
(22) Date of filing: 15.01.2015
(51) Int. Cl.: H04W 84/04, H04W 72/04

(54) **METHOD AND DEVICE FOR ALLOCATING RADIO RESOURCE**
VERFAHREN UND VORRICHTUNG ZUR HANDHABUNG VON KANALRESSOURCENZUWEISUNG
PROCÉDÉ ET DISPOSITIF POUR GÉRER UNE ATTRIBUTION DE RESSOURCES RADIO

(30) Priority: 24.09.2014 CN 201410495788
(43) Date of publication of application: 02.08.2017
(73) Proprietor: ZTE Corporation, Shenzhen, Guangdong 518057 (CN)
(72) Inventor: HOU, Xiaohui, Shenzhen Guangdong 518057 (CN); ZHAO, Lianfeng, Shenzhen Guangdong 518057 (CN)
(74) Representative: Mozzi, Matteo
(86) International application number: PCT/CN2015/070806
(87) International publication number: WO 2015/131672

(56) References cited:
- EP-A1- 2 190 126
- WO-A1-2013/051253
- CN-A- 1 314 064
- CN-A- 101 409 928
- CN-A- 102 238 552
- CN-A- 103 763 777

## Description

### Technical Field

The present disclosure relates to the field of communications, and in particular to a method and device for allocating radio resource.

### Background

With the development of radio communication, particularly with the large-scale popularization of the 4G technology and the future 5G technology, distribution of radio cellular cells presents a vertical distribution structure, i.e., co-existence of the Macrocell and the Smallcell. Moreover, future demands for a large bandwidth are more noteworthy, so a millimetre wave will become an extremely-important 5G band. Due to large path loss of the millimetre wave, the millimetre wave band shall be applied to the Smallcell. More and more Smallcells ultra-densely distributed will become extremely-important carriers for services.

Under the vertical structures of the Macrocell and the Smallcell, how to reasonably allocate radio resources to the terminal will be an important point in 4G+, 5G or even subsequent radio evolution.

An effective solution has not been proposed currently for the problem of radio resource wastage caused by low utilization rate due to unreasonable radio resource allocation in the related art.

Document EP 2190126 A1 discloses a base station communicating with a user device transmitting an uplink signal based on a single-carrier transmission scheme.

### Summary

The invention is defined by the independent claims 1 and 3. Preferred embodiments are defined in the dependent claim 2.

### Brief Description of the Drawings

The drawings described herein are intended to provide further understanding of the present disclosure, and form a part of the present application. The schematic embodiments and descriptions of the present disclosure are intended to explain the present disclosure.
Fig. 1 is a flowchart 1 of a method for allocating radio resource according to an embodiment of the present disclosure.
Fig. 2 is a flowchart 2 of a method for allocating radio resource according to an embodiment of the present disclosure.
Fig. 3 is a flowchart 3 of a method for allocating radio resource according to an embodiment of the present disclosure.
Fig. 4 is a block diagram 1 of a device for allocating radio resource according to an embodiment of the present disclosure.
Fig. 5 is a block diagram 1 of a device for allocating radio resource according to an exemplary embodiment of the present disclosure.
Fig. 6 is a block diagram 2 of a device for allocating radio resource according to an exemplary embodiment of the present disclosure.
Fig. 7 is a block diagram 3 of a device for allocating radio resource according to an exemplary embodiment of the present disclosure.
Fig. 8 is a block diagram 2 of a device for allocating radio resource according to an embodiment of the present disclosure.
Fig. 9 is a block diagram 4 of a device for allocating radio resource according to an exemplary embodiment of the present disclosure.
Fig. 10 is a block diagram 5 of a device for allocating radio resource according to an exemplary embodiment of the present disclosure.
Fig. 11 is a block diagram 3 of a device for allocating radio resource according to an embodiment of the present disclosure.
Fig. 12 is a structural diagram of a Macrocell and a Smallcell according to an exemplary embodiment of the present disclosure.
Fig. 13 is a schematic diagram 1 of radio resource allocation according to an exemplary embodiment of the present disclosure.
Fig. 14 is a schematic diagram 2 of radio resource allocation according to an exemplary embodiment of the present disclosure.

### Detailed Description of the Embodiments

The present disclosure will be described in detail below with reference to the drawings and the embodiments. It is important to note that the embodiments in the present application and the characteristics in the embodiments may be combined without conflicts.

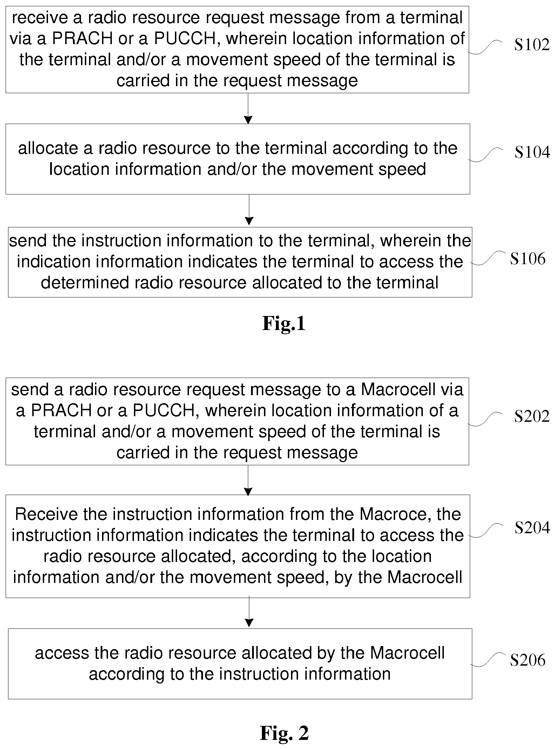

A method for allocating radio resource is provided in the present embodiment. Fig. 1 is a flowchart 1 of a method for allocating radio resource according to an embodiment of the present disclosure. As shown in Fig. 1, the flow includes the following steps S102 to S106.

At step S102: A radio resource request message from a terminal is received via a PRACH or a PUCCH, wherein location information of the terminal and/or a movement speed of the terminal is carried in the request message.

At step S104: A radio resource allocated to the terminal is determined according to the location information and/or the movement speed.

At step S106: Instruction information is sent to the terminal, wherein indicates the indication information indicates the terminal to access the determined radio resource allocated to the terminal.

In the above-mentioned steps, the radio resource request message from the terminal is received via the PRACH or the PUCCH, wherein the request message carries the location information of the terminal and/or the movement speed of the terminal; a Macrocell determines the radio resource allocated to the terminal according to the location information and/or movement speed uploaded from the PRACH or the PUCCH. That is, after a control plane determines the radio resource allocated to the terminal, the Macrocell sends the instruction information to the terminal, wherein indicates the indication information indicates the terminal to access the determined radio resource allocated to the terminal; and the terminal accesses the radio resource determined by the Macrocell. The problem of radio resource wastage caused by low utilization rate due to unreasonable radio resource allocation in the related art is solved, effective separation of control-plane radio resources from user-plane radio resources is implemented, configuration of the control-plane radio resources is reduced, and the utilization rate of the control-plane radio resources is improved.

In an exemplary implementation mode, it is judged whether the movement speed is greater than a first preset value, and if so, a radio resource of the Macrocell, allocated to the terminal, is determined. That is, the Macrocell directly allocates the radio resource to the terminal, thereby making the radio resource allocated reasonably.

In an exemplary implementation mode, it is judged whether the movement speed is smaller than a second preset value, and if so, a radio resource of a Smallcell, allocated to the terminal, is determined. The Macrocell sends instruction information to the Smallcell, wherein the instruction information indicates the Smallcell to allocate the radio resource to the terminal according to the location information and/or the movement speed, the Smallcell is determined according to location position of a mobile terminal, a Smallcell closer to the location information may be selected as a destination Smallcell, and after receiving the instruction information from the Macrocell, the destination Smallcell allocates a radio resource to the mobile terminal, thereby implementing separation of a control plane from a user plane.

In certain embodiments, before a radio resource of a Smallcell, allocated to the terminal, is determined, an instruction signal is sent to the Smallcell, wherein the instruction signal indicates the Smallcell to allocate, according to the location information and/or the movement speed, the radio resource to the terminal.

A method for allocating radio resource is provided in the embodiments of the present disclosure. Fig. 2 is a flowchart 2 of a method for allocating radio resource according to an embodiment of the present disclosure. As shown in Fig. 2, the method includes the following steps S202 to S206.

At stepS202: A radio resource request message is sent to a Macrocell via a PRACH or a PUCCH, wherein location information of a terminal and/or a movement speed of the terminal is carried in the request message.

At step S204: Instruction information from the Macrocell is received, wherein the instruction information indicates the terminal to access the radio resource allocated, according to the location information and/or the movement speed, by the Macrocell.

At step S206: The radio resource allocated by the Macrocell is accessed according to the instruction information.

In the above-mentioned steps, the radio resource request message is sent to the Macrocell via the PRACH or the PUCCH, wherein the request message carries the location information of the terminal and/or the movement speed of the terminal; the instruction information from the Macrocell is received, wherein the instruction information indicates the terminal to access the radio resource allocated, according to the location information and/or the movement speed, by the Macrocell; and the radio resource allocated by the Macrocell is accessed according to the instruction information. The problem of radio resource wastage caused by low utilization rate due to unreasonable radio resource allocation in the related art is solved, effective separation of control-plane radio resources from user-plane radio resources is implemented, configuration of the control-plane radio resources is reduced, and the utilization rate of the control-plane radio resources is improved.

In certain embodiments, when the movement speed is greater than a first preset value, the radio resource allocated by the Macrocell is accessed.

In certain embodiments, when the movement speed is smaller than a second preset value, the radio resource allocated by a Smallcell is accessed.

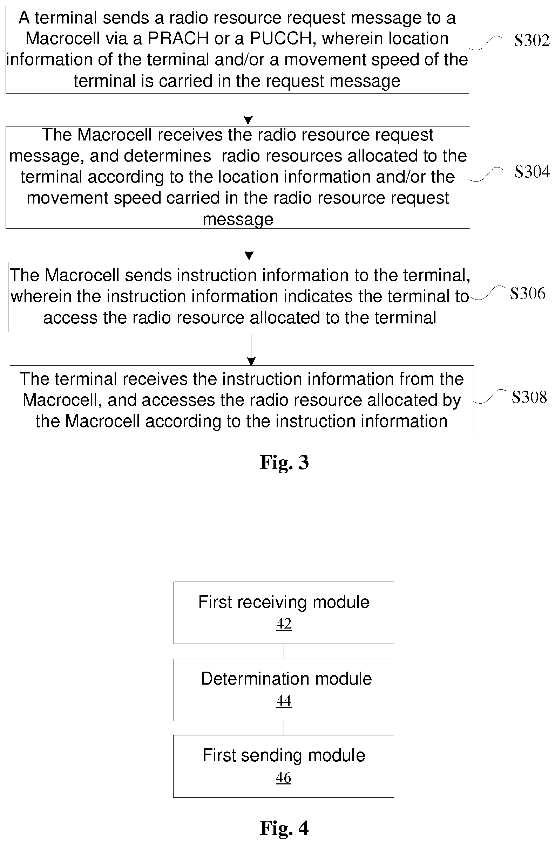

A method for allocating radio resource is also provided in the embodiments of the present disclosure. Fig. 3 is a flowchart 3 of a method for allocating radio resource according to an embodiment of the present disclosure. As shown in Fig. 3, the method includes the following steps S302 to S308.

At step S302: A terminal sends a radio resource request message to a Macrocell via a PRACH or a PUCCH, wherein location information of the terminal and/or a movement speed of the terminal is carried in the request message.

At step S304: The Macrocell receives the radio resource request message, and determines a radio resource allocated to the terminal according to the location information and/or the movement speed carried in the radio resource request message.

At step S306: The Macrocell sends instruction information to the terminal, wherein the instruction information indicates the terminal to access the radio resource allocated to the terminal.

At step S308: The terminal receives the instruction information from the Macrocell, and accesses the radio resource allocated by the Macrocell according to the instruction information.

In the above-mentioned steps, the terminal sends the radio resource request message to the Macrocell via the PRACH or the PUCCH, wherein the request message carries the location information of the terminal and/or the movement speed of the terminal; the Macrocell receives the radio resource request message, and determines the radio resource allocated to the terminal according to the location information and/or the movement speed carried in the radio resource request message; the Macrocell sends the instruction information to the terminal, wherein the instruction information indicates the terminal to access the radio resource allocated to the terminal; and the terminal receives the instruction information from the Macrocell, and accesses the radio resource allocated by the Macrocell according to the instruction information. The problem of radio resource wastage caused by low utilization rate due to unreasonable radio resource allocation in the related art is solved, effective separation of control-plane radio resources from user-plane radio resources is implemented, configuration of the control-plane radio resources is reduced, and the utilization rate of the control-plane radio resources is improved.

According to an aspect of the embodiments of the present disclosure, a device for allocating radio resource is provided. The device is configured to implement the above-mentioned embodiment and an exemplary implementation mode. Those which have been illustrated will not be elaborated herein. Just as a term "module" used below, the combination of software and/or hardware with predetermined functions may be implemented. Although the device described by the following embodiment is better implemented by software, the implementation of hardware or the combination of software and hardware may be possible and conceived.

Fig. 4 is a block diagram 1 of a device for allocating radio resource according to an embodiment of the present disclosure. As shown in Fig. 4, the device includes a first receiving module 42, a determination module 44 and a first sending module 46.

The first receiving module 42 is configured to receive a radio resource request message from a terminal via a PRACH or a PUCCH, wherein location information of the terminal and/or a movement speed of the terminal is carried in the request message;

The determination module 44 is configured to determine a radio resource allocated to the terminal according to the location information and/or the movement speed; and

The first sending module 46 is configured to send instruction information to the terminal, wherein the indication information indicates the terminal to access the determined radio resource allocated to the terminal.

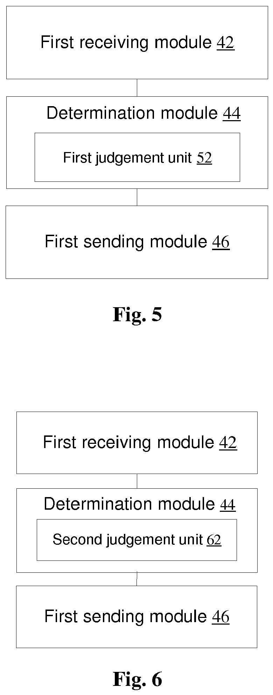

Fig. 5 is a block diagram 1 of a device for allocating radio resource according to an exemplary embodiment of the present disclosure. As shown in Fig. 5, the determination module 44 includes a first judgement unit 52, which is configured to judge whether the movement speed is greater than a first preset value, and allocate a radio resource of a Macrocell to the terminal if the movement speed is greater than the first preset value.

Fig. 6 is a block diagram 2 of a device for allocating radio resource according to an exemplary embodiment of the present disclosure. As shown in Fig. 6, the determination module 44 includes a second judgement unit 62, which is configured to judge whether the movement speed is smaller than a second preset value, and allocate a radio resource of a Smallcell to the terminal if the movement speed is smaller than the second preset value.

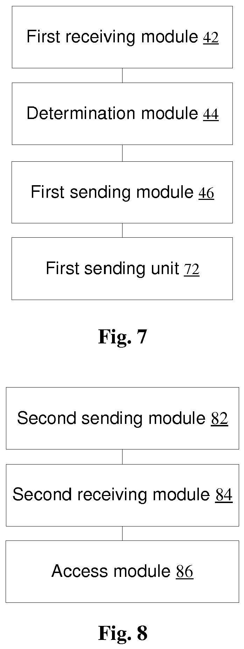

Fig. 7 is a block diagram 3 of a device for allocating radio resource according to an exemplary embodiment of the present disclosure. As shown in Fig. 7, the device further includes a first sending unit 72, which is configured to send an instruction signal to the Smallcell, wherein the instruction signal indicates the Smallcell to allocate, according to the location information and/or the movement speed, the radio resource to the terminal.

A device for allocating radio resource is provided in the embodiments of the present disclosure. Fig. 8 is a block diagram 2 of a device for allocating radio resource according to an embodiment of the present disclosure. As shown in Fig. 8, the device includes a second sending module 82, a second receiving module 84 and an access module 86.

The second sending module 82 is configured to send a radio resource request message to a Macrocell via a PRACH or a PUCCH, wherein location information of a terminal and/or a movement speed of the terminal is carried in the request message.

The second receiving module 84 is configured to receive instruction information from the Macrocell, wherein the instruction information indicates the terminal to access the radio resource allocated, according to the location information and/or the movement speed, by the Macrocell.

The access module 86 is configured to access the radio resource allocated by the Macrocell according to the instruction information.

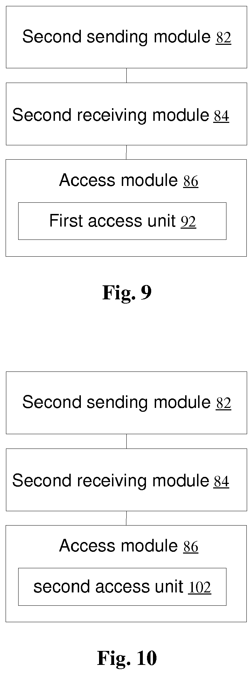

Fig. 9 is a block diagram 4 of a device for allocating radio resource according to an exemplary embodiment of the present disclosure. As shown in Fig. 9, the access module 86 includes a first access unit 92, which is configured to access, when the movement speed is greater than a first preset value, the radio resource allocated by the Macrocell.

Fig. 10 is a block diagram 5 of a device for allocating radio resource according to an exemplary embodiment of the present disclosure. As shown in Fig. 10, the access module 86 includes: a second access unit 102, which is configured to access, when the movement speed is smaller than a second preset value, the radio resource allocated by the Smallcell.

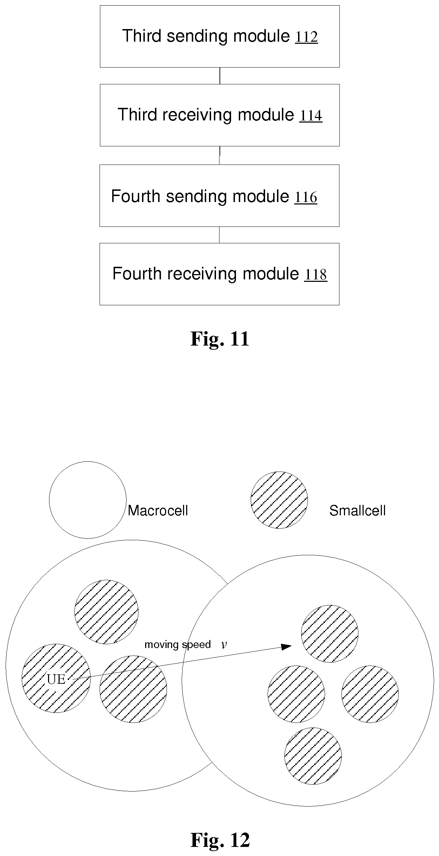

According to another aspect of the embodiments of the present disclosure, a device for allocating radio resource is also provided. Fig. 11 is a block diagram 3 of a device for allocating radio resource according to an embodiment of the present disclosure. As shown in Fig. 11, the device includes a third sending module 112, a third receiving module 114, a fourth sending module 116 and a fourth receiving module 118.

The third sending module 112 is applied to a terminal, and is configured to send a radio resource request message to a Macrocell via a PRACH or a PUCCH, wherein location information of the terminal and/or a movement speed of the terminal is carried in the request message.

The third receiving module 114 is applied to the Macrocell, and is configured to receive the radio resource request message, and determine a radio resource allocated to the terminal according to the location information and/or the movement speed carried in the radio resource request message.

The fourth sending module 116 is applied to the Macrocell, and is configured to send instruction information to the terminal, wherein the instruction information indicates the terminal to access the radio resource allocated to the terminal; and The fourth receiving module 118 is applied to the terminal, and is configured to receive the instruction information from the Macrocell, and access the radio resource allocated by the Macrocell according to the instruction information.

The embodiments of the present disclosure will be further described below with a specific implementation mode.

Fig. 12 is a structural diagram of a Macrocell and a Smallcell according to an exemplary embodiment of the present disclosure. The structures of the Macrocell and the Smallcell are as shown in Fig. 12. Functional positioning of the Macrocell and the Smallcell are different. The Macrocell may emphasize coverage and emphasize a control plane. The Smallcell may emphasize capacity and emphasize a user plane, and the Smallcell is not provided with relevant control channels such as a paging channel and an RACH, a PUCCH and a Physical Downlink Control Channel (PDCCH). A cell broadcast message specifies the Macrocell or the Smallcell, and under an idle state, a User Equipment (UE) only stays on the Macrocell. When the UE initiates a service, the PRACH of the Macrocell carries location information of the UE and/or movement speed information of the UE, wherein the movement speed may be obtained through a Global Positioning System (GPS), a sensor and the like. In an alternative way, the PUCCH of the Macrocell carries the location information of the UE and/or the movement speed information of the UE. In order to be capable of implementing air-interface allocation of physical resources of the Smallcell, downlink transmission of the Macrocell and the Smallcell is required to be synchronized. An appropriate radio resource is allocated to the UE through a PDCCH according to the location information of the UE and/or the movement speed information of the UE. When the movement speed is higher, a radio resource of the Macrocell is directly allocated. The radio resource (Physical Downlink Shared Control Channel (PDSCH) and Physical Uplink Shared Control Channel (PUSCH)) of the Macrocell is allocated to the UE via the PDCCH of the Macrocell. When the movement speed is lower, a radio resource of the Smallcell closest to the UE is directly allocated by inquiring a geographical location database covered by the Smallcell according to a location reported by the UE, and the radio resource (PDSCH and PUSCH) of the Smallcell is allocated to the UE via the PDCCH of the Macrocell. Different threshold values may be set for a speed threshold for different channel models. Geographical location data covered by the Smallcell may be obtained in advance by testing. That is, the uplink/downlink receiving signal intensity is greater than a geographical coverage range of a certain threshold, or the uplink/downlink receiving signal-to-noise ratio is greater than a geographical coverage range of a certain threshold. By means of functions of reasonably positioning the Macrocell and the Smallcell, optimal allocation of radio resources is implemented.

The Macrocell can obtain an actual effective coverage geographical location database of the Smallcell in a coverage area by means of a relevant server. A Macrocell broadcast message specifies Macro, and indicates that a UE stays on the Macrocell under an idle state. When the UE initiates access, a PRACH carries real-time movement speed and real-time location information, and the Macrocell allocates a most appropriate radio resource to the UE according to the location information of the UE and/or the movement speed information of the UE. That is, a Smallcell having the best receiving signal intensity. When the movement speed is higher, a radio resource of the Macrocell is directly allocated. When the movement speed is lower, a radio resource of the Smallcell closest to the UE is directly allocated by inquiring a geographical location database covered by the Smallcell according to a location reported by the UE. As for urban coverage, a high threshold for the movement speed is set as 60km/h, and a low threshold is set as 5km/h. As for suburban coverage, a high threshold for the movement speed is set as 80km/h, and a low threshold is set as 15km/h.

In addition, the Macrocell can obtain an actual effective coverage geographical location database of the Smallcell in a coverage area by means of a relevant server. A Macrocell broadcast message specifies Macro, and indicates that a UE stays on the Macrocell under an idle state. When the UE initiates access, a PUCCH carries real-time movement speed and real-time location information, and the Macrocell allocates a most appropriate radio resource to the UE according to the location information of the UE and/or the movement speed information of the UE. That is, a Smallcell having the best receiving signal intensity. When the movement speed is higher, a radio resource of the Macrocell is directly allocated. When the movement speed is lower, a radio resource of the Smallcell closest to the UE is directly allocated by inquiring a geographical location database covered by the Smallcell according to a location reported by the UE. As for urban coverage, a high threshold for the movement speed is set as 60km/h, and a low threshold is set as 5km/h. As for suburban coverage, a high threshold for the movement speed is set as 80km/h, and a low threshold is set as 15km/h.

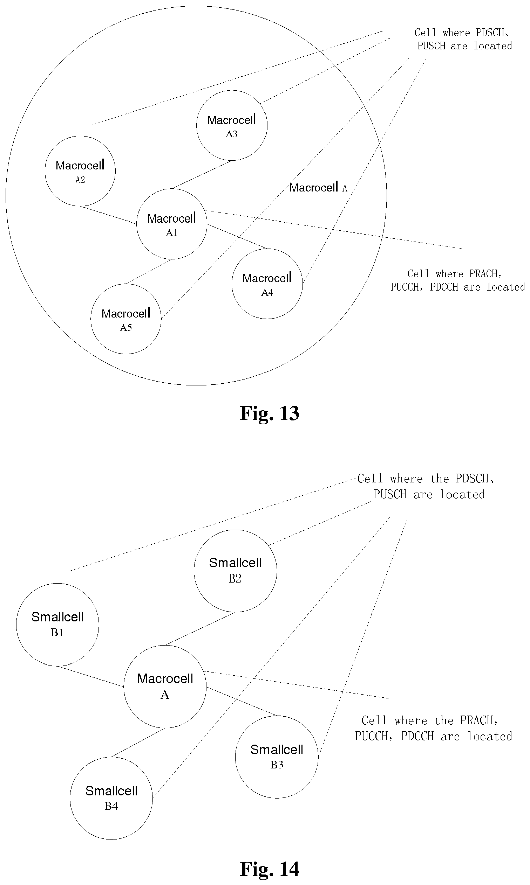

Fig. 13 is a schematic diagram 1 of radio resource allocation according to an exemplary embodiment of the present disclosure. As shown in Fig. 13, a PDSCH and PUSCH of a Macrocell are allocated to a UE by using a PDCCH of the Macrocell, wherein a Macrocell A is a logic MacroCell, a Macrocell A1 is a cell where control-plane channels such as a PRACH, a PUCCH and a PDCCH are located, and a Macrocell A2 to a Macrocell A4 are cells where a PDSCH and a PUSCH are located. That is, the Macrocell A determines a resource allocated to a terminal via the PRACH, the PUCCH and the PDCCH, and then the Macrocell A notifies that the determined resource allocated to the terminal is the PDSCH and PUSCH of one of the Macrocell A2 to the Macrocell A4, and one of the Macrocell A2 to the Macrocell A4 allocates a resource to the terminal via the PDSCH and the PUSCH, thereby implementing effective separation of a control plane from a user plane, reducing configuration of control-plane radio resources, and improving the utilization rate of the control-plane radio resources.

Fig. 14 is a schematic diagram 2 of radio resource allocation according to an exemplary embodiment of the present disclosure. As shown in Fig. 14, a PDSCH and PUSCH of a Macrocell are allocated to a UE by using a PDCCH of the Macrocell, wherein a Macrocell A is a MacroCell, the Macrocell A is a cell where control-plane channels such as a PRACH, a PUCCH and a PDCCH are located, and a Macrocell B1 to a Macrocell B4 are cells where user-plane channels such as a PDSCH and a PUSCH are located, thereby implementing effective separation of a control plane from a user plane, reducing configuration of control-plane radio resources, and improving the utilization rate of the control-plane radio resources.

Obviously, those skilled in the art shall understand that all of the above-mentioned modules or steps in the present disclosure may be implemented by using a general calculation device, may be centralized on a single calculation device or may be distributed on a network composed of multiple calculation devices. Alternatively, they may be implemented by using executable program codes of the calculation devices. Thus, they may be stored in a storage device and executed by the calculation devices, the shown or described steps may be executed in a sequence different from the sequence under certain conditions, or they are manufactured into each integrated circuit module respectively, or multiple modules or steps therein are manufactured into a single integrated circuit module. Thus, the present disclosure is not limited to combination of any specific hardware and software.

### Industrial Applicability

By means of the above-mentioned embodiments and preferred implementation modes, the problem of radio resource wastage caused by low utilization rate due to unreasonable radio resource allocation in the related art is solved, effective separation of control-plane radio resources from user-plane radio resources is implemented, configuration of the control-plane radio resources is reduced, and the utilization rate of the control-plane radio resources is improved.

## Claims

1. A method for allocating a radio resource, comprising, at a Macrocell:
receiving a radio resource request message from a terminal via a Physical Random Access Channel, PRACH, or a Physical Uplink Control Channel, PUCCH, wherein a movement speed of the terminal is carried in the request message (S102);
determining a radio resource allocated to the terminal according to the movement speed (S104); and
sending instruction information to the terminal, wherein the instruction information indicates the terminal to access the determined radio resource allocated to the terminal (S106);
wherein determining a radio resource allocated to the terminal according to the movement speed (S104) comprises:
judging whether the movement speed is greater than a first preset value, and if the movement speed is greater than the first preset value, then allocating a radio resource of the Macrocell to the terminal;
judging whether the movement speed is smaller than a second preset value, and if the movement speed is smaller than the second preset value, then sending an instruction signal to a Smallcell, wherein the instruction signal indicates the Smallcell to allocate, according to the movement speed, the radio resource to the terminal.

2. The method of claim 1, further comprising:
sending, by the terminal, the radio resource request message to the Macrocell; and
receiving, by the terminal, the instruction information from the Macrocell, and accessing the radio resource allocated by the Macrocell or the Smallcell according to the instruction information (S308).

3. A Macrocell for allocating a radio resource, comprising:
a first receiving module (42), configured to receive a radio resource request message from a terminal via a Physical Random Access Channel ,PRACH, or a Physical Uplink Control Channel, PUCCH, wherein a movement speed of the terminal is carried in the request message;
a determination module (44), configured to determine a radio resource allocated to the terminal according to the movement speed; and
a first sending module (46), configured to send instruction information to the terminal, wherein the instruction information indicates the terminal to access the determined radio resource allocated to the terminal;
wherein the determination module (44) comprises:
a first judgement unit (52), configured to judge whether the movement speed is greater than a first preset value, and allocate a radio resource of the Macrocell to the terminal if the movement speed is greater than the first preset value;
a second judgement unit (62), configured to judge whether the movement speed is smaller than a second preset value; and
a first sending unit (72), configured to send an instruction signal to a Smallcell if the movement speed is judged to be smaller than the second preset value, wherein the instruction signal indicates the Smallcell to allocate, according to the movement speed, the radio resource to the terminal.

## Patentansprüche

1. Verfahren zum Zuweisen einer Funkressource, umfassend in einer Makrozelle:
Empfangen einer Funkressourcen-Anforderungsnachricht von einem Endgerät über einen physischen Direktzugriffskanal , Physical Random Access Channel, PRACH, oder einen physischen Uplink-Steuerkanal, Physical Uplink Control Channel, PUCCH, wobei eine Bewegungsgeschwindigkeit des Endgeräts in der Anforderungsnachricht übertragen wird (S102);
Ermitteln einer dem Endgerät gemäß der Bewegungsgeschwindigkeit zugewiesenen Funkressource (S104); und
Senden von Anweisungsinformationen an das Endgerät, wobei die Anweisungsinformationen dem Endgerät angeben, auf die dem Endgerät zugewiesene ermittelte Funkressource zuzugreifen (S106);
wobei das Ermitteln einer dem Endgerät gemäß der Bewegungsgeschwindigkeit zugewiesenen Funkressource (S104) umfasst:
Beurteilen, ob die Bewegungsgeschwindigkeit größer als ein erster voreingestellter Wert ist, und wenn die Bewegungsgeschwindigkeit größer als der erste voreingestellte Wert ist, Zuweisen einer Funkressource der Makrozelle zu dem Endgerät;
Beurteilen, ob die Bewegungsgeschwindigkeit kleiner als ein zweiter voreingestellter Wert ist, und wenn die Bewegungsgeschwindigkeit kleiner als der zweite voreingestellte Wert ist, Senden eines Anweisungssignals an eine kleine Zelle (Smallcell), wobei das Anweisungssignal der kleinen Zelle angibt, dem Endgerät die Funkressource gemäß der Bewegungsgeschwindigkeit zuzuweisen.

2. Verfahren nach Anspruch 1, ferner umfassend:
Senden der Funkressourcen-Anforderungsnachricht von dem Endgerät an die Makrozelle;
und
Empfangen der Anweisungsinformationen der Makrozelle durch das Endgerät und Zugreifen auf die von der Makrozelle oder der kleinen Zelle gemäß den Anweisungsinformationen zugewiesene Funkressource (S308).

3. Makrozelle zum Zuweisen einer Funkressource, umfassend:
ein erstes Empfangsmodul (42), das konfiguriert ist, um eine Funkressourcen-Anforderungsnachricht von einem Endgerät über einen physischen Direktzugriffskanal, PRACH, oder einen physischen Uplink-Steuerkanal, PUCCH, zu empfangen, wobei eine Bewegungsgeschwindigkeit des Endgeräts in der Anforderungsnachricht übertragen wird;
ein Ermittlungsmodul (44), das konfiguriert ist, um eine Funkressource zu ermitteln, die dem Endgerät gemäß der Bewegungsgeschwindigkeit zugewiesen ist; und
ein erstes Sendemodul (46), das konfiguriert ist, um Anweisungsinformationen an das Endgerät zu senden, wobei die Anweisungsinformationen dem Endgerät angeben, auf die dem Endgerät zugewiesene ermittelte Funkressource zuzugreifen;
wobei das Ermittlungsmodul (44) umfasst:
eine erste Beurteilungseinheit (52), die konfiguriert ist, um zu beurteilen, ob die Bewegungsgeschwindigkeit größer als ein erster voreingestellter Wert ist, und dem Endgerät eine Funkressource der Makrozelle zuzuweisen, wenn die Bewegungsgeschwindigkeit größer als der erste voreingestellte Wert ist;
eine zweite Beurteilungseinheit (62), die konfiguriert ist, um zu beurteilen, ob die Bewegungsgeschwindigkeit kleiner als ein zweiter voreingestellter Wert ist; und
eine erste Sendeeinheit (72), die konfiguriert ist, um ein Anweisungssignal an eine kleine Zelle zu senden, wenn beurteilt wird, dass die Bewegungsgeschwindigkeit kleiner als der zweite voreingestellte Wert ist, wobei das Anweisungssignal der kleinen Zelle angibt, dem Endgerät die Funkressource gemäß der Bewegungsgeschwindigkeit zuzuweisen.

## Revendications

1. Procédé d'attribution d'une ressource radio, comprenant, au niveau d'une macrocellule :
la réception d'un message de demande de ressource radio d'un terminal par l'intermédiaire d'un canal à accès aléatoire physique, PRACH, ou d'un canal de commande de liaison montante physique, PUCCH, dans lequel une vitesse de déplacement du terminal est acheminée dans le message de demande (S102) ;
la détermination d'une ressource radio attribuée au terminal en fonction de la vitesse de déplacement (S104) ; et
l'envoi d'informations d'instruction au terminal, dans lequel les informations d'instruction indiquent au terminal d'accéder à la ressource radio déterminée attribuée au terminal (S106) ;
dans lequel la détermination d'une ressource radio attribuée au terminal en fonction de la vitesse de déplacement (S104) comprend :
l'évaluation pour savoir si la vitesse de déplacement est supérieure à une première valeur prédéfinie et, si la vitesse de déplacement est supérieure à la première valeur prédéfinie, alors l'attribution d'une ressource radio de la macrocellule au terminal ;
l'évaluation pour savoir si la vitesse de déplacement est inférieure à une seconde valeur prédéfinie et, si la vitesse de déplacement est inférieure à la seconde valeur prédéfinie, alors l'envoi d'un signal d'instruction à une petite cellule, dans lequel le signal d'instruction indique à la petite cellule d'attribuer, en fonction de la vitesse de déplacement, la ressource radio au terminal.

2. Procédé selon la revendication 1, comportant en outre :
l'envoi, par le terminal, du message de demande de ressource radio à la macrocellule ;
et
la réception, par le terminal, des informations d'instruction provenant de la macrocellule et l'accès à la ressource radio attribuée par la macrocellule ou la petite cellule conformément aux informations d'instruction (S308).

3. Macrocellule d'attribution d'une ressource radio, comprenant :
un premier module de réception (42), configuré pour recevoir un message de demande de ressource radio d'un terminal via un canal à accès aléatoire physique, PRACH, ou un canal de commande de liaison montante physique, PUCCH, dans laquelle une vitesse de déplacement du terminal est portée dans le message de demande ;
un module de détermination (44), configuré pour déterminer une ressource radio attribuée au terminal en fonction de la vitesse de déplacement ; et
un premier module d'envoi (46), configuré pour envoyer des informations d'instruction au terminal, dans laquelle les informations d'instruction indiquent au terminal d'accéder à la ressource radio déterminée attribuée au terminal ;
dans laquelle le module de détermination (44) comprend :
une première unité d'évaluation (52), configurée pour évaluer si la vitesse de déplacement est supérieure à une première valeur prédéfinie et pour attribuer une ressource radio de la macrocellule au terminal si la vitesse de déplacement est supérieure à la première valeur prédéfinie ;
une seconde unité d'évaluation (62), configurée pour évaluer si la vitesse de déplacement est inférieure à une seconde valeur prédéfinie ; et
une première unité d'envoi (72), configurée pour envoyer un signal d'instruction à une petite cellule si la vitesse de déplacement est évaluée comme inférieure à la seconde valeur prédéfinie, dans laquelle le signal d'instruction indique à la petite cellule d'attribuer, en fonction de la vitesse de déplacement, la ressource radio au terminal.
